# EUROPEAN PATENT SPECIFICATION

(11) **EP 2 510 226 B1**
(45) Date of publication and mention of the grant of the patent: **14.06.2017**
(21) Application number: 10795788.8
(22) Date of filing: 07.12.2010
(51) Int. Cl.: F03B 13/18, F03B 13/20

(54) **AN APPARATUS FOR EXTRACTING ENERGY FROM WAVES**
VORRICHTUNG ZUR ENERGIEGEWINNUNG AUS WELLEN
APPAREIL PERMETTANT D'EXTRAIRE L'ÉNERGIE DES VAGUES

(30) Priority: 09.12.2009 NO 20093500
(43) Date of publication of application: 17.10.2012
(73) Proprietor: Aker Engineering & Technology AS, 1326 Lysaker (NO)
(72) Inventor: ERSDAL, Svein, N-0458 Oslo (NO); ROGNE, Øyvind, Ygre, N-0573 Oslo (NO)
(74) Representative: Onsagers AS
(86) International application number: PCT/NO2010/000449
(87) International publication number: WO 2011/071390

(56) References cited:
- FR-A- 685 300
- US-A- 1 746 613
- US-A- 3 970 415
- US-A- 4 258 270

## Description

### Field of the invention

The invention concerns wave power plants. More specifically, the invention concerns an apparatus for installation in a body of water for extracting energy from waves, comprising a first body connected to a plurality of second buoyant bodies, and respective energy transforming means connected between the first body and each of the second bodies, as set out in the introduction to the independent claim.

### Background of the invention

The state of the art includes US 4 464 578 A (Masubuchi), which describes a wave energy converter comprising a float group including at least two floats connected by elongated rigid links disposed at a right angle to the direction of incidence of waves. The floats are free from the coastal ground and sea bed and allowed to heave, sway, and roll. A dynamic system of the converter absorbs the wave energy through the relative vertical movements between the floats and the links and between the adjacent links while the natural frequency of this system is approximately tuned to the frequency of the incident wave. The wave energy converter may be provided with some air chambers and air turbines or one-directional rotating means actuated by this dynamic system so as to drive electric generators coupled thereto.

The state of the art also includes WO 2008/135046 A2 (Clausen), in which a wave energy plant with at least two floating bodies is described. Each floating body is made up of at least two preferably cylindrical pontoons with a length larger than the diameter, where the pontoons are rigidly connected by rigid members, where at least one energy absorbing mechanism is arranged between two hinge-connected floating bodies.

The state of the art also includes WO 2008/004893 A1 (Høgmoe), which describes a wave power apparatus where an array of mutually interconnected buoyancy bodies is arranged on or partly submersible in a body of water. At least one energy generating means is arranged in association with the movable links in the array and forming part of the individual link, the link being shaped as a hinge. The apparatus moves up and down in the water, following the vertical motion of the waves, and energy is generated as adjacent bodies are pivoted with respect to one another.

The state of the art also includes WO 2008/111849 A1 (Espedal), describing a wave energy collecting apparatus comprising a frame with one or more hinged and vertically arranged plate elements. Each plate collects energy from the horizontal velocity component of a passing wave, via a tilting or rotating motion of the plate within the frame as the wave is pushing the plate back and forth. The hinge about which the plate is rotating is positioned below the surface of the water, and the plate is connected to a device capable of transforming the tilting or rotating motion into different types of energy. The apparatus is located at a depth such that the tilting or rotating plate breaks the surface of passing waves at the crest of the waves. The apparatus may also include vertically positioned side walls for directing the pressure fronts from passing waves towards the tilting barrier.

US 4 258 270 A discloses a marine wave power plant having interconnected, swingable, floating basic units with anchoring means. Each unit consists of bearing displacement tubes. a stationary member and a displacement body movably joined thereto and moving with the waves. The wave movements are converted to electrical energy via a hydraulic-electrical system. The rear surface of the movable member is curved with its center of curvature at the journalling axis on the stationary member to avoid pumping between the two members, while a journalling arm is length-adjustable for different wave characteristics. To control the various parameters dependent on incoming waves, a sensor measures the water level in front of the displacement body. The movements of this body, the radian volume of the hydraulic motor and the electrical power output is controlled via a process computer.

US 3 970 415 A describes a power generating plant that utilizes the motion of ocean waves to drive turbine generators in a power station. The plant including a series of underwater units each of which includes a hollow sphere that floats upon the water so that it rises and falls as waves move by. The ball is mounted on an end of a pivoting arm to which there is connected a piston slidable in a cylinder so to pump ocean water through a duct to the turbines in the power station.

US 1 746 613 A describes a wave power plant having an arm mounted for pivotal movement about one axis and for bodily movement about another axis, a float on the arm, a driven member and means operatively connecting the arm and the member by which any movement of the arm causes rotational movement of the driven member.

FR 685 300 A discloses a buoyant element pivotally connected to a structure supported on a seabed, and means for transferring the movement of the buoyant clement to a pump.

It is an object of the invention to overcome some of the shortcomings of the prior art, and to obtain further advantages.

### Summary of the invention

The invention is set forth and characterized in the independent claim, while the dependent claims describe other characteristics of the invention.

The purpose of the invention is to achieve a plant which is effective at low sea states and capable of extracting wave energy from a variety of wave directions, and able to survive large sea states (storms).

The device according to the invention thus comprises an apparatus for installation in a body of water for extracting energy from waves, comprising a first body connected to a plurality of second buoyant bodies distributed along the first body's circumference or perimeter, and respective energy transforming means connected between the first body and each of the second bodies, wherein each second body is connected to the first body via a respective hinge means arranged below the water surface; and each second body is arranged at a mean angle which is inclined with respect to the horizontal plane, when the apparatus is installed in the body of water, wherein the mean angle is the angle at which the apparatus is in its state of equilibrium in the water and defined by an axis extending through the centre of the hinge means and the centre of the second body, characterized in that the plurality of second buoyant bodies are arranged to provide an omnidirectional apparatus. The second body comprises a buoyant element. In one embodiment, the first body is connected to the respective hinge means via respective first connection elements, extending outwardly and preferably downwardly from the first body. The second body may be connected to the hinge means via one or more respective second connection elements.

Each of a plurality of second bodies may be connected to the first body via a pair of second connection element extending from the first body to the hinge means, and wherein each hinge means is connected to the first body via first connection elements. Each first connection element comprises a first end and a second end, said first end being connected to the first body and said second end being connected to a hinge connection means.

In one embodiment, each hinge means is connected to an adjoining hinge means via a respective hinge connection means.

In one embodiment, the first body comprises a buoyant element connected to a seabed below the body of water via mooring means. In another embodiment, the first body is connected to or part of a structure installed on a seabed below the body of water.

The centre of the second body may comprise a centre of mass or a centre of buoyancy.

The apparatus according to the invention allows exploitation of the surge and heave forces from the waves and exhibits a high efficiency in a wide band of frequencies.

### Brief description of the drawings

The above mentioned and other characteristics of the invention will be clear from the following description of a preferential form of embodiment, given as a non-restrictive example, with reference to the attached drawings where like components have been given like reference numbers, and wherein:
Figure 1 is a perspective view of a first embodiment of the invention;
Figure 2 is a sectional view of the embodiment illustrated in figure 1, taken in vertical a plane along the line A-A in figure 1 (and the line A-A in figure 3);
Figure 3 is a top view of the embodiment illustrated in figure 1; without the hydraulic cylinders;
Figure 4 is a top view of a second embodiment of the invention;
Figure 5 is a top view of a third embodiment of the invention;
Figure 6 is a top view of a fourth embodiment of the invention;
Figure 7 is a side view of a fifth embodiment of the invention; and
Figure 8 is a side view of a sixth embodiment of the invention.

### Detailed description of a preferential embodiment

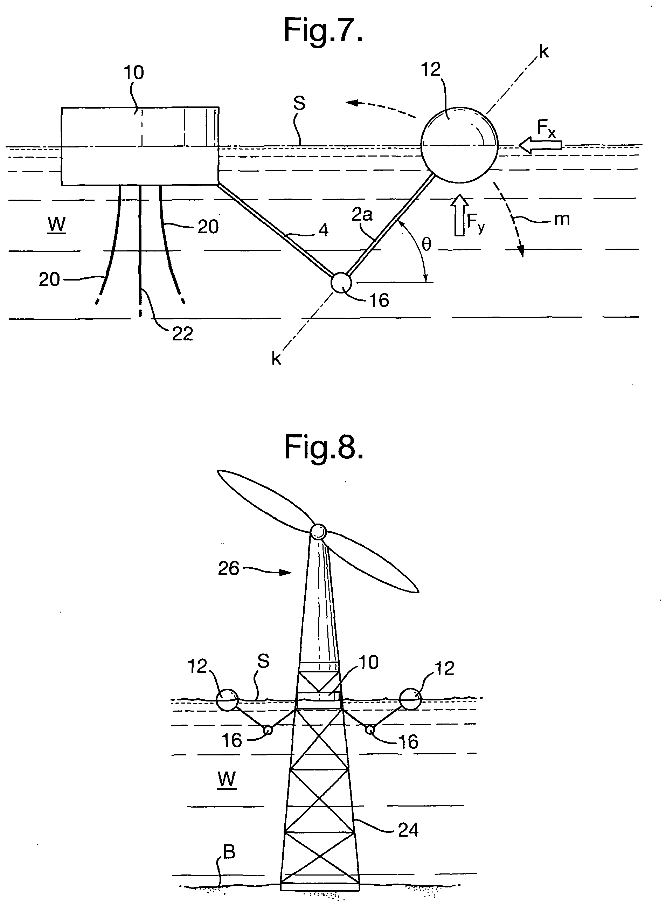

Referring initially to figure 7, which illustrates the wave energy extraction apparatus according to the invention in its most basic configuration, the apparatus comprises a first body 10 connected to a second, buoyant, body 12 via a strut arrangement and a hinge 16. The apparatus is illustrated in an installed state in a body of water W and floating in the surface S of the water such that the hinge 16 is arranged below the water surface. The first body 10 is in this embodiment a buoyant body which is moored to a seabed (seabed not illustrated in figure 7) via mooring lines 20. Power and control cables, for controlling the apparatus and for conducting the converted energy away from the apparatus, are indicated schematically by reference number 22. Such moorings lines, power cables and control cables are part of the state of the art, and will therefore not be discussed further.

The strut 4 is rigidly attached to the first body 10 and extends away from the first body and somewhat downwardly in the water. The strut 2a, to which the second body is attached, is rotatably connected to the hinge 16, whereby the second body 12 may rotate with respect to the hinge 16 as indicated by the dotted arrow M in figure 7. The lengths of the struts and the properties of the bodies are dimensioned and designed such that the second body is arranged at a mean angle θ which is inclined with respect to the horizontal plane. In figure 7, the mean angle θ is the angle between the horizontal plane and an axis k, which extends through the hinge, along the strut 2a longitudinal axis and through the centre of the second body 12.

For the purposes of this description, the term "mean angle" is defined as the angle when the apparatus is at rest in still water, i.e. a neutral, or an equilibrium state of the apparatus. When the apparatus is subjected to water waves, the apparatus will move correspondingly in the water, and the second body 12 will rotate about the hinge 16. Thus, in operation of the apparatus, the second body assumes transient angles which are less than and greater than the means angle θ, but the mean angle represents the angle at which the apparatus is in its state of equilibrium.

When the apparatus according to the invention is installed in the water and thus subjected to the forces created by the waves, the second body 12 will be able to extract energy both from the horizontal force component and the vertical force component (illustrated in figure 7 as arrows Fₓ and Fy, respectively). The apparatus according to the invention is thus able to utilize the wave energy more comprehensively than prior art wave power plants.

The optimal mean angle θ for each apparatus is determined based on the anticipated climate (i.a. wave conditions) at the location where the apparatus is to be installed. However, the mean angle θ is inclined, i.e. greater than 0° (horizontal) and less than 90° (vertical).

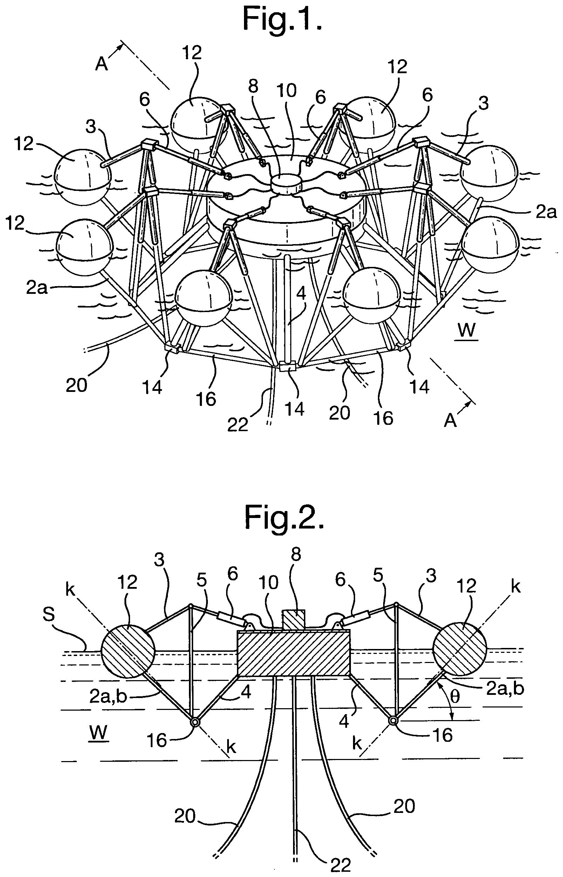

Analyses of the embodiment of the invention illustrated in figures 1-3 for a given wave condition have determined a mean angle optimal value of approximately 55°, and it is believed that the optimal mean angle value in most cases will be in the range of 35° to 75°.

The skilled person will understand that the mean angle θ may be designed by varying one or more of a number of parameters, e.g. the length and/or rake of the first body strut 4; the length and shape of the second body strut 2a; the size and shape of the second body 12 and/or the buoyancy of the second body 12.

The rotation of the second body 12 about the hinge 16, and thus the maximum transient angles (above and below the mean angle) may be controlled by structural means or by the resistance in the energy converting device, or both. One alternative energy converting device may be integrated with or in the hinge 16 and comprise e.g. a stator connected to the one body and a rotor connected to the other body, which is a well known configuration for generating electrical energy from the hinge rotation. Another energy converting device may comprise a linear hydraulic motor (e.g. a hydraulic cylinder) connected between the bodies, wherein the relative movement between the bodies is converted to hydraulic pressure, which in turn may be converted to mechanical or electrical energy, as the skilled person will know. As these energy converting devices are known in the art, they will not be described in further detail here other than to exemplify that the energy converting devices may be designed to provide the desired stiffness (or resistance) in order to limit the maximum transient angles.

In the embodiment illustrated in figure 7, the first body 10 comprises a buoyant element which is free to move with the waves within the constraints of the mooring lines. Figure 7 also shows that the second body 12 comprises a spherical buoyant element. The shape of the second element shall not, however, be restricted to spherical elements. Also, with reference to figure 8, the first body 10 may be fixed with respect to the waves, e.g. as a part of a structure 24 which is resting on the seabed (B). In the example illustrated in figure 8, the apparatus according to the invention comprises two second bodies 12, and the first body 10 is integrated into a wind power plant having a truss support structure 24 and a tower and wind turbine 26.

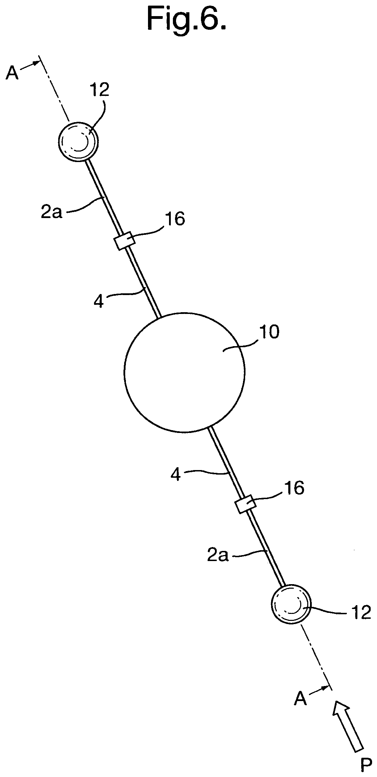

Turning now to figure 6, an embodiment of the apparatus according to the invention, having two second bodies 12, is illustrated in a principle sketch. Two struts 4 extend from diametrically opposite sides of the fist body. Each strut is connected to respective hinges, which in turn are rotatably connected to respective second bodies 12 via respective struts 2a. Such symmetrical arrangement about the first body 10 is advantageous when the apparatus is aligned with the wave propagation direction P. A vane element (not shown) may be fitted to the first body, to ensure alignment with the direction of the wave and/or current.

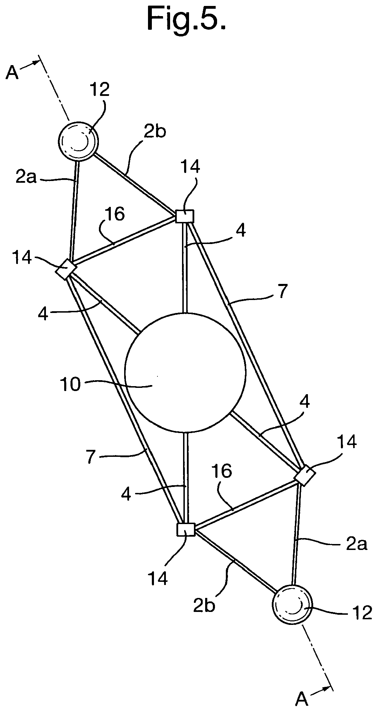

Figure 5 illustrates an embodiment which in principle is similar to the embodiment illustrates in figure 6, but where certain structural features are different. Struts 4 in pairs extends from diametrically opposite sides of the first body, each strut 4 terminating in a hinge connector 14. On both sides of the first body 10, a hinge 16 extends between two hinge connectors 14, and each hinge 16 is rotatably connected to respective second bodies 12 via struts 2a, 2b. Bracings 7, connected between hinge connectors, provide structural support between the pair of second bodies.

Figures 1, 2 and 3 illustrate a further embodiment of the invention, where eight second bodies 12 are arranged around the first body 10 at regular intervals. Mooring lines 20 and power/control lines 22 are schematically illustrated. These lines, and the techniques for mooring the first body to the seabed, are well known to the skilled person and will therefore not be discussed further. Each second element 12 is rotatably connected to a hinge 16 via struts 2a, 2b, and each hinge 16 is supported by respective hinge connectors 14. Each hinge connector 14 is connected to the first body 10 via respective struts 4.

Figures 1 and 2 (figure 2 being a sectional view taken in vertical a plane along the line A-A in figure 1 also illustrate how each second body 12 is connected to the first body 10 via respective energy converting devices, here exemplified in the form of linear hydraulic motor (e.g. a hydraulic cylinder), via struts 3 and bracings 5. Thus, the rotation of each second body about the hinge 16 will cause relative movement between the bodies, which is converted to hydraulic pressure, which in turn may be converted to mechanical or electrical energy, as the skilled person will know. As mentioned above, these energy converting devices are known in the art and will therefore not be described in further detail. The skilled person will also know that the energy converting devices may be designed to provide the desired stiffness (or resistance) in order to limit the maximum transient angles. Figure 2 also illustrate how the second bodies 12 are arranged at an angle θ with the horizontal plane, and how the aforementioned axis k-k extends through the centre of the hinge and the centre of the second body 12. In figure 2, the centre of buoyancy of the second body 12 is coincident with the body's centre of mass.

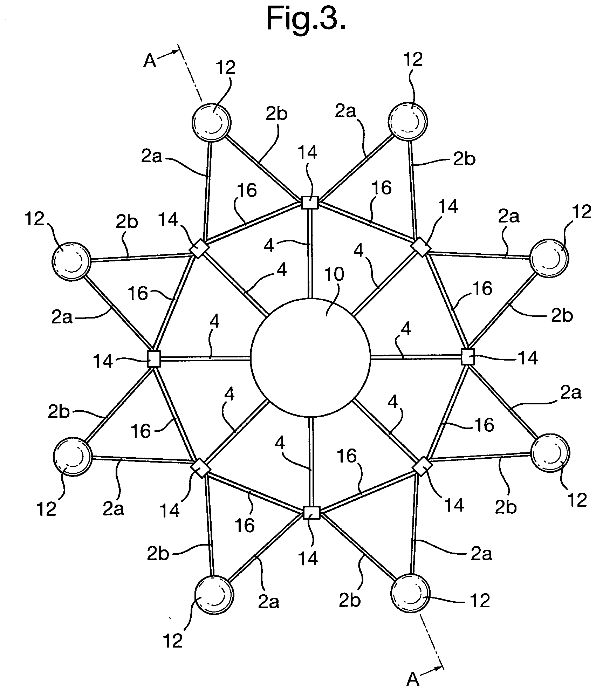

Figure 3 is a top view of the embodiment illustrated in figure 1, but the hydraulic cylinders have been removed. This figure illustrates the polygonal (here: octagonal) structure formed by the hinges 16 and hinge connectors 14, and how one second body 12 is rotatably connected to each hinge 16 via a pair of struts 2a, 2b. An advantage of arranging several second bodies 12 around one a central first body 10 is that the apparatus is omnidirectional, inasmuch as it is effective at any wave direction. The apparatus does not need to be turned with the weather, which allows for a simple mooring system.

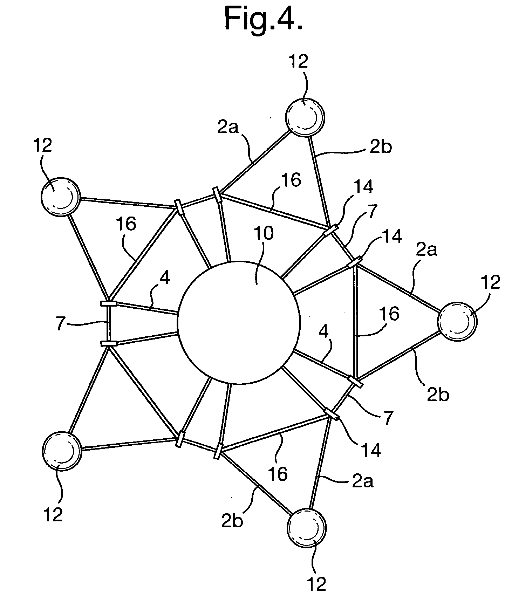

Figure 4 illustrates another embodiment of the apparatus, comprising an odd number (here: five) of second bodies 12 arranged around the first body 10.

Although the invention has been described above by an embodiment where the first and second bodies are interconnected via a strut arrangement 2a, b, 4, it should be understood that the invention also covers embodiments where such struts are superfluous or integrated into the respective first and second body, in for example embodiments where the first body extends further into the water and comprises a cantilevered box structure at its lower end, onto which the hinge 16 may be attached, and, similarly, the second body comprising an elongated shape, extending from the surface of the water and down to the hinge connection.

Generally, in the apparatus according to the invention, the displacement of the first and second bodies may be designed such that the displacement of the sum of the second bodies 12 equal the displacement of the first body 10. For example, the displacement of the individual eight second bodies 12 in figure 1 may be designed to be 1/8 of the displacement of the first body 10.

## Claims

1. An apparatus for installation in a body of water (W) for extracting energy from waves, comprising
- a first body (10) connected to a plurality of second buoyant bodies (12) distributed along the the first body's (10) circumference or perimeter, and
- respective energy transforming means (6; 16) connected between the first body and each of the second bodies, wherein
- each second body (12) is connected to the first body (10) via a respective hinge means (16) arranged below the water surface (S); and
- each second body (12) is arranged at a mean angle (θ) which is inclined with respect to the horizontal plane, when the apparatus is installed in the body of water,
- wherein the mean angle (θ) is the angle at which the apparatus is in its state of equilibrium in the water and
- defined by an axis (k-k) extending through the centre of the hinge means (16) and the centre of the second body,
**characterized in that**
the plurality of second buoyant bodies are arranged to provide an omnidirectional apparatus.

2. The apparatus of claim 1, wherein the number of second buoyant bodies is at least five.

3. The apparatus of claim 1, wherein the number of second buoyant bodies is at least eight.

4. The apparatus of any one of the preceding claims, wherein the mean angle (θ) is within the range of 35° to 75°.

5. The apparatus of any one of the preceding claims, wherein the mean angle (θ) is approximately 55°.

6. The apparatus of any one of the preceding claims, wherein each of a plurality of second bodies (12) is connected to the first body (10) via a pair of second connection elements (2a,b) extending from the second body to the hinge means (16), and wherein each hinge means is connected to the first body (10) via first connection elements (4).

7. The apparatus of claim 6, wherein each first connection element (4) comprises a first end and a second end, said first end being connected to the first body (10) and said second end being connected to a hinge connection means (14).

8. The apparatus of claim 7, wherein each hinge means is connected to an adjoining hinge means via a respective hinge connection means (14).

9. The apparatus of any one of the preceding claims, wherein the first body comprises a buoyant element connected to a seabed (B) below the body of water (W) via mooring means (20).

10. The apparatus of any one of the preceding claims, wherein the first body (10) is connected to or part of a structure (24) installed on a seabed (B) below the body of water (W).

11. The apparatus of any one of the preceding claims, wherein said centre of the second body comprises a centre of mass or a centre of buoyancy.

12. The apparatus of any one of the preceding claims, wherein the displacement of the first body (10) and the second bodies (12) is configured such that the displacement of the sum of the second bodies (12) equal the displacement of the first body (10).

## Patentansprüche

1. Vorrichtung zur Installation in einem Gewässer (W), um Energie aus Wellen zu gewinnen, Folgendes aufweisend:
- einen ersten Körper (10), der an mehrere zweite Schwimmkörper (12) ange-schlossen ist, die entlang des Umfangs oder Perimeters des ersten Körpers (10) verteilt sind, und
- jeweilige Energieumwandlungseinrichtungen (6; 16), die zwischen dem ersten Körper und jeweils den zweiten Körpern angeschlossen sind, wobei
- jeder der zweiten Körper (12) an den ersten Körper (10) über eine jeweilige Gelenkvorrichtung (16) angeschlossen ist, die unter der Wasseroberfläche (S) angeordnet ist; und
- jeder der zweiten Körper (12) in einem mittleren Winkel (θ) angeordnet ist, der in Bezug auf die horizontale Ebene geneigt ist, wenn die Vorrichtung im Gewässer installiert ist,
- wobei es sich bei dem mittleren Winkel (θ) um den Winkel handelt, in dem sich die Vorrichtung im Wasser in ihrem Gleichgewichtszustand befindet, und
- der durch eine Achse (k-k) definiert ist, die durch die Mitte der Gelenkvorrichtung (16) und die Mitte des zweiten Körpers verläuft,
**dadurch gekennzeichnet, dass**
die mehreren zweiten Schwimmkörper zur Bereitstellung einer omnidirektionalen Vorrichtung angeordnet sind.

2. Vorrichtung nach Anspruch 1, wobei die Anzahl zweiter Schwimmkörper mindestens fünf beträgt.

3. Vorrichtung nach Anspruch 1, wobei die Anzahl zweiter Schwimmkörper mindestens acht beträgt.

4. Vorrichtung nach einem der vorhergehenden Ansprüche, wobei der mittlere Winkel (θ) im Bereich von 35° bis 75° liegt.

5. Vorrichtung nach einem der vorhergehenden Ansprüche, wobei der mittlere Winkel (θ) ungefähr 55° beträgt.

6. Vorrichtung nach einem der vorhergehenden Ansprüche, wobei jeder der mehreren zweiten Körper (12) an den ersten Körper (10) über ein Paar von zweiten Verbindungselementen (2a, 2b) angeschlossen ist, die sich vom zweiten Körper zur Gelenkvorrichtung (16) erstrecken, und wobei jede Gelenkvorrichtung an den ersten Körper (10) über erste Verbindungselemente (4) angeschlossen ist.

7. Vorrichtung nach Anspruch 6, wobei jedes erste Verbindungselement (4) ein erstes Ende und ein zweites Ende hat, wobei das erste Ende an den ersten Körper (10) angeschlossen ist und das zweite Ende an eine Gelenkverbindungsvorrichtung (14) angeschlossen ist.

8. Vorrichtung nach Anspruch 7, wobei jede Gelenkvorrichtung an eine angrenzende Gelenkvorrichtung über eine jeweilige Gelenkverbindungsvorrichtung (14) angeschlossen ist.

9. Vorrichtung nach einem der vorhergehenden Ansprüche, wobei der erste Körper ein Schwimmelement hat, das an den Meeresboden (B) unter dem Gewässer (W) über Verankerungseinrichtungen (20) angeschlossen ist.

10. Vorrichtung nach einem der vorhergehenden Ansprüche, wobei der erste Körper (10) an eine Struktur (24) angeschlossen oder Teil von dieser ist, die am Meeresboden (B) unter dem Gewässer (W) installiert ist.

11. Vorrichtung nach einem der vorhergehenden Ansprüche, wobei die Mitte des zweiten Körpers einen Massenschwerpunkt oder einen Auftriebsschwerpunkt hat.

12. Vorrichtung nach einem der vorhergehenden Ansprüche, wobei die Verdrängung bzw. Verschiebung des ersten Körpers (10) und der zweiten Körper (12) so ausgelegt ist, dass die Verdrängung bzw. Verschiebung der Summe der zweiten Körper (12) der Verdrängung bzw. Verschiebung des ersten Körpers (10) entspricht.

## Revendications

1. Appareil destiné à être installé dans un corps d'eau (W) pour extraire l'énergie des vagues, comprenant :
un premier corps (10) raccordé à une pluralité de seconds corps flottants (12) répartis le long de la circonférence ou du périmètre du premier corps (10), et
des moyens de transformation d'énergie (6 ; 16) respectifs raccordés entre le premier corps et chacun des seconds corps, dans lequel :
chaque second corps (12) est raccordé au premier corps (10) via un moyen de charnière (16) respectif agencé au-dessous de la surface d'eau (S) ; et
chaque second corps (12) est agencé à un angle moyen (θ) qui est incliné par rapport au plan horizontal, lorsque l'appareil est installé dans le corps d'eau,
dans lequel l'angle moyen (θ) est l'angle auquel l'appareil est dans son état d'équilibre dans l'eau, et
défini par un axe (k-k) s'étendant à travers le centre du moyen de charnière (16) et le centre du second corps,
**caractérisé en ce que** :
la pluralité de seconds corps flottants est agencée pour fournir un appareil omnidirectionnel.

2. Appareil selon la revendication 1, dans lequel le nombre de seconds corps flottants est au moins de cinq.

3. Appareil selon la revendication 1, dans lequel le nombre de seconds corps flottants est au moins de huit.

4. Appareil selon l'une quelconque des revendications précédentes, dans lequel l'angle moyen (θ) est dans la plage de 35° à 75°.

5. Appareil selon l'une quelconque des revendications précédentes, dans lequel l'angle moyen (θ) est d'approximativement 55°.

6. Appareil selon l'une quelconque des revendications précédentes, dans lequel chacun d'une pluralité de seconds corps (12) est raccordé au premier corps (10) via une paire de seconds éléments de raccordement (2a, b) s'étendant à partir du second corps jusqu'au moyen de charnière (16), et dans lequel chaque moyen de charnière est raccordé au premier corps (10) via les premiers éléments de raccordement (4).

7. Appareil selon la revendication 6, dans lequel chaque premier élément de raccordement (4) comprend une première extrémité et une seconde extrémité, ladite première extrémité étant raccordée au premier corps (10) et ladite seconde extrémité étant raccordée à un moyen de raccordement de charnière (14).

8. Appareil selon la revendication 7, dans lequel chaque moyen de charnière est raccordé à un moyen de charnière attenant via un moyen de raccordement de charnière (14) respectif.

9. Appareil selon l'une quelconque des revendications précédentes, dans lequel le premier corps comprend un élément flottant raccordé à un lit marin (B) au-dessous du corps d'eau (W) via un moyen d'amarre.

10. Appareil selon l'une quelconque des revendications précédentes, dans lequel le premier corps (10) est raccordé à une structure (24) ou à une partie de cette dernière, installée sur un lit marin (B) au-dessous du corps d'eau (W).

11. Appareil selon l'une quelconque des revendications précédentes, dans lequel ledit centre dudit second corps comprend un centre de masse ou un centre de flottabilité.

12. Appareil selon l'une quelconque des revendications précédentes, dans lequel le déplacement du premier corps (10) et des seconds corps (12) est configuré de sorte que le déplacement de la somme des seconds corps (12) égale le déplacement du premier corps (10).
